(19)
Europäisches Patentamt
European Patent Office
Office européen des brevets

(11) EP 2 327 740 A2

(12) EUROPEAN PATENT APPLICATION

(43) Date of publication:
01.06.2011 Bulletin 2011/22

(51) Int Cl.:
C08J 9/12 (2006.01)   C08J 9/14 (2006.01)
C08J 9/32 (2006.01)   C08L 75/04 (2006.01)

(21) Application number: 10192533.7

(22) Date of filing: 25.11.2010

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 26.11.2009 KR 20090114962

(71) Applicant: Cheil Industries Inc.
Uiwang-si, Gyeonggi-do (KR)

(72) Inventors:
• Baek, Kyung Hyun
Uiwang-si, Gyeonggi-do (KR)
• Jun, Jung Bae
Uiwang-si, Gyeonggi-do (KR)
• Ju, Jung Kyu
Uiwang-si, Gyeonggi-do (KR)

(74) Representative: Bardehle, Heinz et al
Bardehle Pagenberg
Galileiplatz 1
81679 München (DE)

(54) **Rigid polyurethane foam having an excellent insulating ability and method for preparing the same**

(57)    The present invention provides rigid polyurethane foam comprising thermal expansive particles which are displaced to penetrate a strut of a structure of the polyurethane foam so that the particles are foam-formed to be exposed into one or more cells of the polyurethane foam. Further, the rigid polyurethane foam can comprise hollow shaped thermal expansive particles which are displaced to penetrate a surface of a cell in the polyurethane foam so that the particles are foam-formed to be exposed into one or more cells of the polyurethane foam. The rigid polyurethane of the present invention characterizes excellent insulating property.

Fig 1

EP 2 327 740 A2

## Description

The present invention relates to rigid polyurethane foam and method for preparing the same, and more particularly, to rigid polyurethane foam having excellent insulating by regulating the closed cell size and method for preparing the same.

Generally, the heat insulating property ($\lambda_F$) of polyurethane foam is represented by the following equation.

$$\lambda_F = \lambda_m + \lambda_g + \lambda_r$$

λm: adiabatic index through the polymer matrix
λg: adiabatic index through the gas within the closed cell
λr: adiabatic index through thermal radiation

In equation, heat insulating property of gas (λg) means the adiabatic index of gas component of the blowing agent existing in polyurethane foam (the closed cell) and is made of up to 60~70% of the total adiabatic index of polyurethane foam. Chlorofluorocarbons are conventionally used as a blowing agent. However, CFCs are regarded as environment-destroying materials and have a high Global Warming Potential (GWP) and a high Ozone Depletion Potential (ODP). Therefore the production and use of CFCs have recently been prohibited, and are being replaced by a carbonate pentane blowing agent. However, when cyclopentane is used as a blowing agent, polyurethane foam has a low heat insulating function because the gas adiabatic index of cyclopentane (Cyclopentane: 0.012 kcal/m.h.˚C) is higher than HCFCs (HCFCs: 0.0094 kcal/m.h.˚C) and has a large closed cell size.

In equation, heat insulating property of solid (λm) means the solid adiabatic index of the urethane resin comprising the rigid polyurethane foam and is made of up to 10~20% of the total adiabatic index of polyurethane foam.

In equation, heat insulating property of radiation (λr) means radiation adiabatic index about the closed cell of polyurethane foam and is made of up to 20~30% of the total adiabatic index of polyurethane foam. λr may be lowered by decreasing the size of the closed cell.

With regards to λg, it is difficult to enhance the heat insulating property due to using cyclopentane. Because chlorofluorocarbons are regarded as environment-destroying materials, it is encouraged to use cyclopentane for environment protection. Further, with regards to λm, unless the polyurethane foam per se is substituted, improving marvelous heat insulating property is difficult. With regards to λr, it can be lowered by decreasing the size of the closed cell.

According to Korean Patent Application No.2004-0034455, the methods for preparing rigid urethane foam, regulating polyurethane cell size by adding the nucleating agent such as perfluorinated alkene can make heat insulating property of rigid polyurethane foam be enhanced.

Although nucleating agents can enhance heat insulating properties, the nucleating agents such as chlorofluorocarbons are harmful to the environment and, therefore, cause environmental problems.

US7230036 and PCT/US02/16620 disclose thermal expansive particles used in an insulating foam. As a blowing agent, because the use of a halogen-based hydrocarbon is harmful to the environment, using a nonhalogen-based hydrocarbon is preferred. However, using a hydrocarbon such as cyclopentane may induce fire risk and require high costs.

The cited patent above is directed to controlling risk elements of fire and keeping a blowing agent by using a thermal expansive particle including a hydrocarbon. However, the effect of improving heat insulating property is not identified.

The object of the present invention provides rigid polyurethane foam having excellent heat insulating property.

Another object of the present invention provides rigid polyurethane foam having a small size cell and a homogeneous cell.

Another object of the present invention provides methods for preparing the rigid polyurethane foam having excellent heat insulating property.

To solve the problem above, the present invention provides a rigid polyurethane foam comprising thermal expansive particles which are displaced to penetrate a strut of a structure of the polyurethane foam so that the particles are foam-formed to be exposed into one or more cells of the polyurethane foam.

According to an aspect of the present invention, the said rigid polyurethane foam, further comprising hollow shaped thermal expansive particles which are displaced to penetrate a surface of a cell in the polyurethane foam so that the particles are foam-formed to be exposed into one or more cells of the polyurethane foam.

According to an aspect of the present invention, the amount of the thermal expansive particles are about 0.5 to about 10 parts by weight per 100 parts by weight of urethane resin forming the polyurethane foam.

According to an aspect of the present invention, the cells of the polyurethane foam are formed by foaming a blowing agent.

According to an aspect of the present invention, the weight ratio between the blowing agent and the thermal expansive particles is about 1:0.2 to about 1: 2.

According to an aspect of the present invention, the mean diameter of the cells of the polyurethane foam is about 100 to about 400 $\mu$m. Preferably, the mean volume diameter of the thermal expansive particles before being foamed is about 5 to about 40 $\mu$m.

According to an aspect of the present invention, the thermal expansive particles are polymer particles containing a hydrocarbon based foam compound, wherein the boiling point of the hydrocarbon based foam compound is about -10 to about 50˚C and wherein the glass transition temperature (Tg) of the polymer particles is about 40 to about 100˚C.

According to an aspect of the present invention, the blowing agent is a hydrocarbon based foam compound, methylene chloride, hexane, acetone, water or a mixture of two or more thereof.

According to an aspect of the present invention, an insulator for a refrigerator is prepared by applying the said rigid polyurethane foam.

To solve another problem, the present invention relates to a method for preparing rigid polyurethane foam, comprising:

dispersing thermal expansive particles in a polyol mixture including a dispersing agent, a catalyst and water; preparing the polyol mixture by adding a blowing agent to the polyol mixture with thermal expansive particles dispersed therein; and foaming a resin composition by urethane reaction heat of the reaction between isocyanate and polyol mixture including the thermal expansive particles and the blowing agent, wherein the amount of the thermal expansive particles is about 0.5 to about 10 parts by weight per 100 parts by weight of the urethane resin, and wherein the mixture weight ratio between the blowing agent and the thermal expansive particles is about 1:0.2 to about 1:2. Preferably, the mean volume diameter of the thermal expansive particle before being foamed is about 5 to about 40 $\mu$m.

These and/or other aspects and advantages of the invention will become apparent and more readily appreciated from the following description of the embodiments, taken in conjunction with the accompanying drawing of which:

Fig 1 is a rigid polyurethane foam image in accordance with an embodiment of the present invention.

Fig 2a and Fig 2b are scanned electron microscope pictures of a rigid urethane foam prepared in accordance with another embodiment of the present invention.

Fig 3 is a graph representing thermal expansion property (TMA) of a thermal expansion particle prepared by regulating composition and the suspension method condition.

The present invention will be described more fully hereinafter in the following detailed description of the invention, in which some, but not all embodiments of the invention are described. Indeed, this invention may be embodied in many different forms and should not be construed as limited to the embodiments set forth herein; rather, these embodiments are provided so that this disclosure will satisfy applicable legal requirements.

The present invention provides a rigid polyurethane foam comprising thermal expansive particles which are displaced to penetrate a strut of a structure of the polyurethane foam so that the particles are foam-formed to be exposed into one or more cells of the polyurethane foam.

The thermal expensive particle is capable of being displaced to penetrate a surface of a cell in polyurethane foam. Accordingly, the rigid polyurethane foam further comprises hollow shaped thermal expansive particles which are displaced to penetrate a surface of a cell in the polyurethane foam so that the particles are foam-formed to be exposed into one or more cells of the polyurethane foam.

The thermal expansive particle which foams above a certain temperature may be dispersed on polyol or isocyanate to form cells on polyurethane foam so that it can regulate the size of the cells by suppressing the expansion thereof

The thermal expansive particle may regulate cell size of urethane foam as being caught in cells so that the rigid polyurethane foam of the present invention has a structure which is totally different from a structure of existing rigid polyurethane foam.

In other words, the rigid polyurethane foam of the present invention is formed by a thermal expansive particle being stuck in a structure of a cell of urethane foam and by the thermal expansive particle and the blowing agent competitively foaming while foaming so that the rigid polyurethane foam is to have appropriate size of cells.

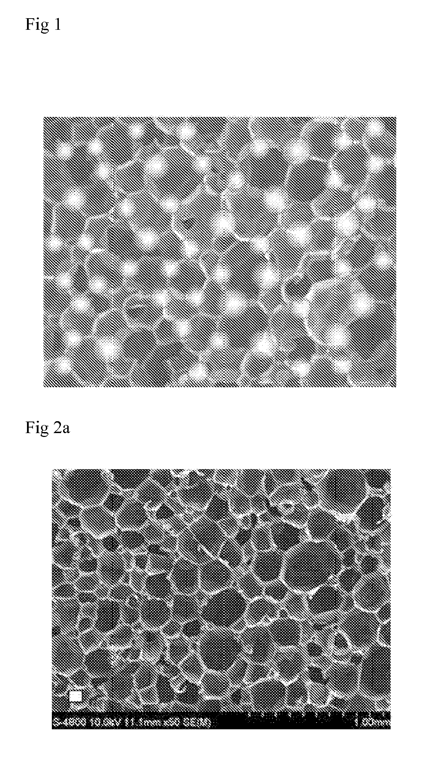

Fig 1 is illustrating a structure such as the above structure as drawing of rigid polyurethane foam according to the present invention. The blue colored sphere indicates a foamed thermal expansive particle.

Thus, the rigid polyurethane foam according to the present invention makes adiabatic index through thermal radiation and is lowered by regulating the cell size so that heat insulting property of the foam itself can be improved.

Also, the nucleating agent such as perfluorinated alkene was used to regulate cell size of the rigid polyurethane foam in the past, and is classified as an environment-regulated material. By contrast, the rigid polyurethane foam of the present invention uses a thermal expansive particle containing hydrocarbon based blowing agent composing an environmental friendly material to regulate cell size thereof. Therefore the rigid polyurethane foam of the present invention is environmentally friendly by not using an environment-regulated material.

The rigid polyurethane foam according to the present invention is capable of being prepared by the following method..

Preferably, the amount of the thermal expansive particles is about 0.5 to about 10 parts by weight per 100 parts by weight of urethane resin forming the polyurethane foam and the weight ratio between the blowing agent and the thermal expansive particles is about 1: 0.2 to about 1: 2.

When the amount of the thermal expansive particles is less than 0.5 parts by weight per 100 parts by weight of urethane resin forming the polyurethane foam, a cell size of foaming urethane may not be regulated effectively. When the amount of the thermal expansive particles exceeds 10 parts by weight per 100 parts by weight of urethane resin forming the polyurethane foam, size of foaming urethane cell may not be regulated effectively and improving effect of adiabatic index may be lowered by increasing solid adiabatic index following rise of density.

Preferably, the weight ratio between the blowing agent and the thermal expansive particles is about 1:0.2 to about 1:2. Foaming property of the thermal expansive particle can be improved by absorbing more heat required to foam a thermal expansive particle by way of regulating an amount of a blowing agent. When a blowing agent is included less than the above range, foaming property of urethane foam may be deteriorated. When a blowing agent is included more than the above range, the excess blowing agent absorbs the reacting heat from urethane which induces problems in foaming the thermal expansive particles.

Preferably, the mean volume diameter of the thermal expansive particles before being foamed is about 5 to about 40 $\mu$m.

According to the rigid polyurethane foam of the present invention, preferably, the mean diameter of the cells of the polyurethane foam is about 100 to about 400 $\mu$m.

The thermal expansive particle is a particle that expands if a certain amount of heat is applied. The expansion starting temperature (Tstart) and the maximum expansion temperature (Tmax) is determined by glass transition temperature (Tg) of polymer material forming outer shape and boiling temperature of the hydrocarbon based foaming compound agent. Also, maximum expansive displacement (Dmax) is regulated by an amount of hydrocarbon based foaming compound and gas transmission property of polymer material (Gas barrier).

With regards to the rigid polyurethane foam of the present invention, preferably, wherein the thermal expansive particles are polymer particles containing a hydrocarbon based foam compound, wherein the boiling point of the hydrocarbon based foam compound is about -10 to about 50˚C and wherein the glass transition temperature (Tg) of the polymer particles forming the outer is about 40 to about 100˚C.

Preferably, the expansion starting temperature (Tstart) of thermal expansive particle used in the rigid polyurethane foam of the present invention is 50 to 110˚C, the maximum expansion temperature (Tmax) is 70 to 140˚C and the maximum expansive displacement (Dmax) is more than 1000.

The blowing agent comprised in the rigid polyurethane foam of the present invention may be hydrocarbon based foaming compound having a room temperature for the boiling point as well as cyclopentane used in preparing existing polyurethane foam. For example, not limited in, it may be a normal pentane, isopentane and the like. Also, the said blowing agent can use a physical blowing agent using reacting heat of urethane such as, not limited in, methylenechloride, hexane, acetone and the like and use a chemical blowing agent having property generating $CO_2$ by way of reacting water and isocyanate. Further, a mixture of two or more of the said blowing agents can be used.

The rigid polyurethane foam of the present invention is capable of being used in insulating materials for, not limited in, refrigerator, freezer, construction, vehicle and the like usefully because it has enhanced insulating property.

The present invention also provides a method for preparing a rigid polyurethane foam, comprising dispersing thermal expansive particles in a polyol mixture including a dispersing agent, a catalyst and water; preparing the polyol mixture by adding a blowing agent to the polyol mixture with thermal expansive particles dispersed therein; and foaming a resin composition by urethane reaction heat of the reaction between isocyanate and polyol mixture including the thermal expansive particles and the blowing agent, wherein the amount of the thermal expansive particles is about 0.5 to about 10 parts by weight per 100 parts by weight of the urethane resin, and wherein the mixture weight ratio between the blowing agent and the thermal expansive particles is about 1:0.2 to about 1:2.

The rigid polyurethane foam of the present invention having the structure as mentioned above can be prepared by way of the above method for preparing rigid polyurethane foam of the present invention.

According to the method for preparing a rigid polyurethane foam of the present invention, wherein the mean volume diameter of the thermal expansive particle before being foamed is about 5 to about 40 $\mu$m.

According to the rigid polyurethane foam of the present invention, the preferable thermal expansive particles are polymer particles including a hydrocarbon based foam compound, wherein the boiling point of the hydrocarbon based foam compound is about - 10 to about 50˚C and wherein the glass transition temperature (Tg) of the polymer particles forming the outer is about 40 to about 100˚C.

Preferably, the expansion starting temperature (Tstart) of thermal expansive particle used in the rigid polyurethane foam of the present invention is 50 to 110˚C, the maximum expansion temperature (Tmax) is 60 to 120˚C and the maximum expansive displacement (Dmax) is more than 500.

The blowing agent comprised in the rigid polyurethane foam of the present invention may be hydrocarbon based foaming compound having room temperature for the boiling point as well as cyclopentane used in preparing existing polyurethane foam. For example, not limited in, it may be a normal pentane, isopentane and the like. Also, the said blowing agent can use a physical blowing agent using reacting heat of urethane such as, not limited in, methylenechloride, hexane, acetone and the like and use a chemical blowing agent having property generating $CO_2$ by way of reacting water and isocyanate. Further, a mixture of two or more of the said blowing agents can be used.

The present invention provides the rigid polyurethane foam prepared by the preparing method of the rigid polyurethane foam according to the present invention.

The rigid polyurethane foam prepared by the preparing method of the rigid polyurethane foam according to the present invention, preferably, the mean diameter of the cells of the polyurethane foam is about 100 to about 400 $\mu$m.

The invention may be better understood by reference to the following examples which are intended for the purpose of illustration and are not to be construed as in any way limiting the scope of the present invention, which is defined in the claims appended hereto.

EXAMPLE

**Preparation of the thermal expansive particle**

**Example of Preparation 1**

An oil mixture was prepared mixing 64 g of vinylidenchloride(VDC), 64 g of acrylonitrile(AN), 16 g of methylacrylate(MA), 16 g of methylmethacrylate, 0.3 g of Dipentaerythritol hexaacrylate(DPEHA), 16 g of isopentane, 16 g of normal pentane and 1.6 g of di-2-ethylhexylperoxydicarbonate(OPP).

An aqueous dispersed liquid was prepared by adjusting pH value of a mixture to pH 3, which was prepared by adding 450 g of ion-exchanged water, 108 g of sodium chloride, 36 g of colloidal silica (Ludox-AM), 0.5 g of polyvinylpyrrolidone and 1.2 g of aqueous solution containing 1 % of sodium nitrite.

After an aqueous dispersed liquid and an oil mixture which were prepared above were mixed, a suspension was prepared by dispersing the mixture which was violently mixed by a homomixer (HOMOMIXER 2.5, Primix) at speed 5,000 rpm. The suspension was immediately transferred to a pressure reactor having a capacity of 1 L which was replaced with nitrogen and sealed. The reaction mixture was maintained at a temperature of 60˚C for 20 hours under rotation of 400rpm and initiative pressure of the reaction being 3kgf/cm$^2$. The obtained produce was filtrated, washed, and dried so that a thermal expansive particle was prepared.

**Example of Preparation 2-7**

A thermal expansive particle was prepared by the same procedure of preparation Example 1 as table 1 which shows the composition and condition of suspension procedure.

[Table 1]

| | Example of Preparation 1 | Example of Preparation 2 | Example of Preparation 3 | Example of Preparation 4 | Example of Preparation 5 | Example of Preparation 6 | Example of Preparation 7 |
|---|---|---|---|---|---|---|---|
| VDC | 64 | 64 | 64 | - | 112 | - | 64 |
| AN | 64 | 64 | 64 | 80 | 32 | 104 | 64 |
| MAN | - | - | - | 16 | - | 16 | - |
| MA | 16 | 16 | 16 | - | 8 | 24 | 16 |
| EA | - | - | - | 48 | - | - | - |
| MMA | 16 | 16 | 16 | 16 | 8 | 16 | 16 |
| DPEHA | 0.3 | 0.3 | 0.3 | 0.3 | 0.3 | 0.3 | 0.3 |
| iso-Pentane | 16 | 16 | 16 | 16 | 12 | 16 | 16 |
| n-Pentane | 16 | 16 | 16 | 16 | 12 | 16 | 16 |
| OPP | 1.6 | 1.6 | 1.6 | 1.6 | 1.6 | 1.6 | 1.6 |
| Suspension stirring rate (RPM) | 5000 | 7000 | 4000 | 6000 | 5000 | 6000 | 3000 |

Table 2 below analyzes the diameter of thermal expansive particles prepared by the Examples of preparation.

○ Analysis method of the thermal expansive particle: analyzing diameter of particle

\* The diameter of particle before foaming: The mean volume diameter and distribution (C.V, coefficient of variation) of the particles are analyzed by a particle size analyzer (LS 13320, Bekman coulter) that is laser diffraction type.

\* The diameter of particle after foaming: An expansive particle was observed by an optical microscope (BX51, OLYPUS) after maintaining within an oven for 3 minutes at Tmax. The mean volume diameter of an expansive particle was analyzed by using an image analyzing machine (TOMORO scopeeye 3.6, SARAM SOFT).

[Table 2]

| | Example of Preparation 1 | Example of Preparation 2 | Example of Preparation 3 | Example of Preparation 4 | Example of Preparation 5 | Example of Preparation 6 | Example of Preparation 7 |
|---|---|---|---|---|---|---|---|
| the diameter of particle before foaming ($\mu$m) | 26.8 | 13.3 | 35.0 | 25.3 | 25.8 | 27.2 | 49.9 |
| C.V (%) | 45.5 | 33.6 | 68.6 | 43.2 | 43.5 | 48.3 | 60.3 |
| the diameter of particle after foaming ($\mu$m) | 125.6 | 78.3 | 170.2 | 130.2 | 120.3 | 130.8 | 231.5 |
| Tstart (˚C) | 75 | 79 | 73 | 74 | 62 | 92 | 69 |
| Tmax (˚C) | 105 | 108 | 102 | 106 | 91 | 142 | 107 |
| Dmax ($\mu$m) | 2332 | 2560 | 2625 | 2103 | 1832 | 2325 | 2525 |

**Example 1**

Rigid urethane foam was prepared by a method of HandMix in a vertical mold (250x250x50).

A dispersing agent, catalysis, water and polyol were mixed following table 3 as below showing a mixing ratio. A thermal expansive particle prepared by the example of preparation 1 was added therein, the mixture was dispersed by using the disperser of rotation-revolution type. A polyol mixture was made by adding a blowing agent in polyol mixture in which thermal expansive particles were dispersed.

After an isocyanate was added to a polyol mixture containing thermal expansive particles in the certain ratio (polyol mixture : isocyanate = 100 : 118), the mixture was mixed by means of a homomixer (Homo Disper 2.5, Primix) at speeds of 5,000 rpm for 5 seconds so that the mixture was reacted as injecting vertical mold.

[Table 3]

| Type | | Contents |
|---|---|---|
| Premixed Polyol | Toluenediamine-based polyol (OH value: 350~550) | 60.0 |
| | Sucrose glycerine-based polyol (OH value: 360~490) | 20.0 |
| | Trimethylolpropane-based polyol (OH value: 350~450) | 10.0 |
| | Glycerine-based polyol (OH 가 : 168~670) | 10.0 |
| | dispersing agent* | 2.5 |
| | catalyse** | 2.0 |
| | Water | 1.95 |
| | blowing agent (Cyclo-pentane) | 16.5 |
| isocyanate (MDI, amino equivalent: 135) | | 145.1 |
| * dispersing agent: Polyether-polydimethylsiloxane copolymer ** catalyse: amine catalyse | | |

**Example 2-11**

Rigid urethane foam was prepared by the method of Example 1 as mentioned above and applying the component of table 4 and table 5.

According to Example 1-11, table 4 and table 5 shows the cell size of urethane foam, density of urethane foam, K-factor and Cell Close ratio.

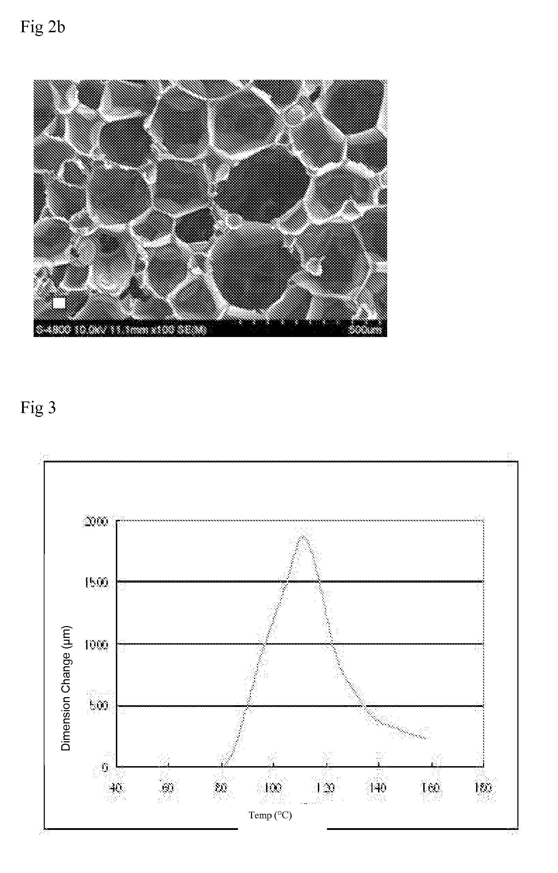

Fig 2a and Fig 2b is a scanned electron microscopy picture of rigid urethane foam prepared as Example 2.

[Table 4]

| | | Example 1 | Example 2 | Example 3 | Example 4 | Example 5 | Example 6 |
|---|---|---|---|---|---|---|---|
| Polyol | | 100.0 | 100.0 | 100.0 | 100.0 | 100.0 | 100.0 |
| Dispersing agent | | 2.5 | 2.5 | 2.5 | 2.5 | 2.5 | 2.5 |
| Catalyse | | 2.0 | 2.0 | 2.0 | 2.0 | 2.0 | 2.0 |
| Water | | 1.9 | 1.9 | 1.9 | 1.9 | 1.9 | 1.9 |
| Blowing agent | | 16.5 | 16.5 | 16.5 | 16.5 | 16.5 | 16.5 |
| MDI | | 145.1 | 145.1 | 145.1 | 145.1 | 145.1 | 145.1 |
| Thermal expansion | Type | Example of Preparation1 | Example of Preparation 1 | Example of Preparation 1 | Example of Preparation 2 | Example of Preparation 3 | Example of Preparation 4 |
| | Contents (%)* | 12.5 | 12.5 | 12.5 | 10.0 | 15.0 | 12.5 |
| Blowing Temperature(°C) | | 40 | 80 | 120 | 80 | 80 | 80 |
| Cell size ($\mu$m)** | | 299 | 288 | 282 | 295 | 292 | 281 |
| Foam density | | 32.1 | 32.4 | 32.2 | 32.8 | 31.9 | 31.4 |
| K-Factor*** | | 167.2 | 165.3 | 163.9 | 167.8 | 166.9 | 164.6 |
| Cell Close ratio | | 93.8 | 92.6 | 92.0 | 90.7 | 90.2 | 93.4 |

**EP 2 327 740 A2**

[Table 5]

| | | Example7 | Example8 | Example9 | Example10 | Example11 |
|---|---|---|---|---|---|---|
| Polyol | | 100.0 | 100.0 | 100.0 | 100.0 | 100.0 |
| Dispersing agent | | 2.5 | 2.5 | 2.5 | 2.5 | 2.5 |
| Catalyse | | 2.0 | 2.0 | 2.0 | 2.0 | 2.0 |
| Water | | 1.9 | 1.9 | 1.9 | 1.9 | 1.9 |
| Blowing agent | | 16.5 | 16.5 | 16.5 | 12.0 | 12.0 |
| MDI | | 145.1 | 145.1 | 145.1 | 145.1 | 145.1 |
| Thermal expansion | Type | Example of Preparation 5 | Example of Preparation 1 | Example of Preparation 1 | Example of Preparation 1 | Example of Preparation 5 |
| | Contents (%) * | 12.5 | 5.0 | 20.0 | 12.5 | 12.5 |
| Blowing Temperature(˚C) | | 80 | 80 | 80 | 80 | 80 |
| Cell size ($\mu$m)* | | 283 | 315 | 297 | 288 | 273 |
| Foam density | | 31.5 | 32.2 | 32.6 | 31.5 | 30.0 |
| K-Factor** | | 163.2 | 168.8 | 166.3 | 163.3 | 162.5 |
| Cell Close ratio | | 93.2 | 90.5 | 92.2 | 93.5 | 93.8 |
| * Urethane foam Cell Size<br>** K-Factor unit: $10^{-4}$ kcal/m·h·˚C | | | | | | |

**Comparative Example 1 to 5**

Rigid urethane foam was prepared by the method of Example 1 as mentioned above and applying the component of table 5.

According to Comparative Example 1-5, table 6 shows the cell size of urethane foam, density of urethane foam, K-factor and Cell Close ratio.

[Table 6]

| | | Comparative Example 1 | Comparative Example 2 | Comparative Example 3 | Comparative Example 4 | Comparative Example 5 | Comparative Example 6 |
|---|---|---|---|---|---|---|---|
| Polyol | | 100.0 | 100.0 | 100.0 | 100.0 | 100.0 | 100.0 |
| Dispersing | | 2.5 | 2.5 | 2.5 | 2.5 | 2.5 | 2.5 |
| Catalyse | | 2.0 | 2.0 | 2.0 | 2.0 | 2.0 | 2.0 |
| Water | | 1.9 | 1.9 | 1.9 | 1.9 | 1.9 | 1.9 |
| Blowing agent | | 16.5 | 16.5 | 16.5 | 16.5 | 16.5 | 16.5 |
| MDI | | 145.1 | 145.1 | 145.1 | 145.1 | 145.1 | 145.1 |
| Thermal expansion | Type | - | - | - | Example of Preparation 6 | Example of Preparation 7 | Example of Preparation 1 |
| | Conten ts(%)* | - | - | - | 12.5 | 15.0 | 30.0 |
| Blowing Temperature | | 40 | 80 | 120 | 80 | 80 | 80 |
| Cell size ($\mu$m) | | 362 | 405 | 415 | 402 | 423 | 387 |
| Foam density | | 32.8 | 31.9 | 30.8 | 31.7 | 31.7 | 33.2 |
| K-Factor | | 171.8 | 178.9 | 179.9 | 179.3 | 181.2 | 179.3 |
| Cell Close ratio | | 93.7 | 93.2 | 93.2 | 91.4 | 87.3 | 88.3 |

According to the rigid poly urethane foam of Example 1-11 and Comparative Example 1-5, theproperty measurements are as below.

[Adiabatic Index, K-factor]

The urethane foam prepared by employing a method of HandMix was tailored by a standard size of 200x2000x25 and then the thermal conductivity was analyzed by using a thermal conductivity analyzer (HC-074, EKO). The thermal conductivity was measured according to the ASTM-C518 method guarded heat flow meter method.

[Cell Size]

After the urethane foam was observed by magnifying 50 times using a scanning electron microscope (S4800, Hitach), the cell size of the urethane foam was analyzed by the volume mean diameter using an image analyzer (TOMORO scopeeye 3.6, SARAM SOFT)

[Cell Close ratio]

Cell Close ratio represents percentage of closed cells among cells of urethane foam. Cell Close ratio was analyzed by using an Ultrapycnomter 1000 (Quantachrome) on a foam tailored by a standard size of 25x25x25.

[Analysis of thermal expansive property]

Analyzing instrument TMA Q-400 (Thermomechanical Analyzer, TA Instrument) was used in the analysis. A thermal expansive particle was put by the amount of 1.0 mg in an aluminum pan of a diameter of 6.7 mm and 4.5 mm deep, and covered by an aluminum pan of a diameter of 6.5 mm and 4.0 deep to prepare a sample. In the condition of applying a force of 0.05 N to a probe using a TMA Expansion Probe form, the room temperature was heated up to 200°C by a heating speed of 5°C/min and the vertical displacement of the probe was analyzed.

: Expansion starting temperature (Tstart): A temperature which the probe displacement starts
: Maximum expansion temperature (Tmax): A temperature which the probe displacement is maximum
: maximum expansive displacement (Dmax): Displacement which the probe displacement is maximum ($\mu$m)

Fig 3 is a graph which is illustrating thermal expansion property (TMA) of a thermal expansive particle which is obtained by analyzing as mentioned above.

o Effect of expansion temperature (Examples 1-3, Comparative Examples 1-3)
: As the expansion temperature increased, the amount of heat the thermal expansive particle absorbs increased and, thereby, the expansiveness increased and the decreasing effect of the cell size increased, leading to a superior K-factor value.
: As the expansion temperature for preparing an urethane foam without thermal expansive particles increased, the pressure of the blowing agent increased which made the cell structure nonhomogeneous, leading to a deterioration of the insulation.
o Diameter of a thermal expansive particle (Examples 2, 4~5, Comparative Example 5)
: When the diameter of the thermal expansive particle was within an appropriate size (10-40 $\mu$m), the thermal expansive particle was homogeneously distributed in the urethane foam and the cells were formed homogeneously, leading to an effect of decreasing the K-factor. However, when the diameter of the thermal expansive particle was larger than the appropriate size (10-40 $\mu$m), the cell structure became nonhomogeneous and, thereby, the K-factor increased.
o Composition of a thermal expansive particle (Example 6)
: Although the monomer composition of the thermal expansive particle was different, when the thermal expansive properties were identical, the decreasing effect of the cell size applied to the urethane foam was similar.
o Expansion temperature of a thermal expansive particle (Example 7, Comparative Example 4)
: When the expansion starting temperature of a thermal expansive particle (Tstart) and the maximum expansion temperature (Tmax) is lowered, the K-factor value is excellent by way of being capable of expanding the particle sufficiently at a low temperature (80°C, mold temperature) relatively.
: With regards to a thermal expansive particle (EMP-5), when the expansion starting temperature (Tstart) is more than 90°C and the maximum expansion temperature (Tmax) is more than 140°C, the K-factor following introducing the thermal expansive particle has no excellent effect in the consequence of not expanding sufficiently at 80°C, mole temperature.

o Content of a thermal expansive particle (Examples 8-9, Comparative Example 6)

: There was an optimum section (contents of particle is 0.5~10% by weight per urethane resin) in accordance with the contents of the thermal expansive particles, and when the contents was over that section, however, the solid factor was increased leading to no improvement in insulation.

o Content of a blowing agent (Examples 10~11)

: It was confirmed that when the contents of the blowing agent was regulated, the heat required for foaming the thermal expansive particles could be more absorbed, and, thereby, the expansiveness of the thermal expansive particles was increased, leading to a inhibition of the cell size.

Many modifications and other embodiments of the invention will come to mind to one skilled in the art to which this invention pertains having the benefit of the teachings presented in the foregoing descriptions. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation, the scope of the invention being defined in the claims.

**Claims**

1. Rigid polyurethane foam comprising thermal expansive particles which are displaced to penetrate a strut of a structure of the polyurethane foam so that the particles are foam-formed to be exposed into one or more cells of the polyurethane foam.

2. The rigid polyurethane foam of claim 1, further comprising hollow shaped thermal expansive particles which are displaced to penetrate a surface of a cell in the polyurethane foam so that the particles are foam-formed to be exposed into one or more cells of the polyurethane foam.

3. The rigid polyurethane foam of claim 1 or claim 2, wherein the amount of the thermal expansive particles is about 0.5 to about 10 parts by weight per 100 parts by weight of urethane resin forming the polyurethane foam.

4. The rigid polyurethane foam of claim 1 or claim 2, wherein the cells of the polyurethane foam are formed by foaming a blowing agent.

5. The rigid polyurethane foam of claim 4, wherein the weight ratio between the blowing agent and the thermal expansive particles is about 1:0.2 to about 1: 2.

6. The rigid polyurethane foam of claim 1 or claim 2, wherein the mean volume diameter of the thermal expansive particles before being foamed is about 5 to about 40 $\mu$m.

7. The rigid polyurethane foam of claim 1 or claim 2, wherein the mean diameter of the cells of the polyurethane foam is about 100 to about 400 $\mu$m.

8. The rigid polyurethane foam of claim 1 or claim 2, wherein the thermal expansive particles are polymer particles containing a hydrocarbon based foam compound, wherein the boiling point of the hydrocarbon based foam compound is about -10 to about 50°C and wherein the glass transition temperature (Tg) of the polymer particles is about 40 to about 100°C.

9. The rigid polyurethane foam of claim 4, wherein the blowing agent is a hydrocarbon based foam compound, methylene chloride, hexane, acetone, water or a mixture of two or more thereof.

10. A method for preparing rigid polyurethane foam, comprising:

dispersing thermal expansive particles in a polyol mixture including a dispersing agent, a catalyst and water;
preparing the polyol mixture by adding a blowing agent to the polyol mixture with thermal expansive particles dispersed therein; and
foaming a resin composition by urethane reaction heat of the reaction between isocyanate and polyol mixture including the thermal expansive particles and the blowing agent,

wherein the amount of the thermal expansive particles is about 0.5 to about 10 parts by weight per 100 parts by weight of the urethane resin, and

wherein the mixture weight ratio between the blowing agent and the thermal expansive particles is about 1:0.2 to about 1:2.

11. The method for preparing rigid polyurethane foam of claim 10, wherein the mean volume diameter of the thermal expansive particle before being foamed is about 5 to about 40 $\mu$m.

12. The method for preparing a rigid polyurethane foam of claim 10, wherein the thermal expansive particles are polymer particles including a hydrocarbon based foam compound, wherein the boiling point of the hydrocarbon based foam compound is about -10 to about 50°C and wherein the glass transition temperature (Tg) of the polymer particles is about 40 to about 100°C.

13. The method for preparing a rigid polyurethane foam of claim 10, wherein the blowing agent is a hydrocarbon foam compound, methylene chloride, hexane, acetone, water or a mixture of two or more thereof.

14. The rigid polyurethane foam of claim 14, wherein the mean diameter of the cells of the polyurethane foam is about 100 to about 400 $\mu$m.

15. An insulator for a refrigerator obtainable by applying the rigid polyurethane foam of any one of claims 1 to 9.

Fig 1

Fig 2a

Fig 2b

Fig 3

**REFERENCES CITED IN THE DESCRIPTION**

**Patent documents cited in the description**

- KR 20040034455
- US 7230036 B
- US 0216620 W